# EUROPEAN PATENT APPLICATION

(11) **EP 4 835 157 A2**
(43) Date of publication of application: **04.11.2026**
(21) Application number: 26175877.5
(22) Date of filing: 30.04.2026
(51) Int. Cl.: C25B 11/063, B22F 1/10, B22F 1/107

(54) **METHOD OF PRODUCING A LARGE-AREA TITANIUM POROUS TRANSPORT LAYER AND TITANIUM POROUS TRANSPORT LAYER PRODUCED THEREBY**

(30) Priority: 02.05.2025 KR 20250058114
(71) Applicant: Enerich Co., Ltd., Gwangmyeong-si, Gyeonggi-do (KR)
(72) Inventor: PARK, Man-ho, GWANGMYEONG-SI (KR); KWON, Young-kyung, GWANGMYEONG-SI (KR); JIN, Young-min, GWANGMYEONG-SI (KR); SONG, Nak-kyu, GWANGMYEONG-SI (KR); KIM, Si-woo, GWANGMYEONG-SI (KR); JEONG, Min-kyung, GWANGMYEONG-SI (KR)
(74) Representative: EP&C

(57) **Abstract**

The present disclosure relates to a method for manufacturing a titanium porous transport layer. The method comprises: forming a green sheet by applying a slurry including titanium powder and a binder; and debinding and sintering the green sheet. A particle size of the titanium powder satisfies conditions in which D50 is 15-30 *µ*m and D90is 30-40 *µ*m.

## Description

### BACKGROUND OF THE INVENTION

### 1. Field of the Invention

The present invention relates to a method of producing a porous transport layer (PTL) disposed on an anode side of a polymer electrolyte membrane water electrolyzer and used to supply water to a cell.

### 2. Description of the Related Art

Electrolysis is a promising option for carbon-free hydrogen production from renewable resources and nuclear resources. Electrolysis is a process of separating water into hydrogen and oxygen using electricity. The electrolysis process is performed in an apparatus called an electrolyzer.

The size of the electrolyzer can vary from small appliance-sized equipment suitable for small-scale distributed hydrogen production to, for example, large-scale central production facilities that can be directly connected to renewable or other non-greenhouse-gas-emitting forms of electricity production.

Hydrogen produced through electrolysis may result in zero greenhouse gas emissions depending on the electricity source used. When evaluating the benefits and economic viability of hydrogen production through electrolysis, the source of the required electricity must be considered, including emissions resulting from electricity generation as well as cost and efficiency.

In many regions of the world, current power grids are not ideal for supplying electricity required for electrolysis. The reason for this is that the amount of fuel required to generate electricity is large due to greenhouse gases emitted during the actual electricity production process and the low efficiency of the electricity production process.

A promising technology for generating hydrogen is to use a polymer electrolyte membrane (PEM) electrolyzer. In the PEM electrolyzer, the electrolyte is a solid special plastic material similar to an ion exchange membrane.

During electrolysis of water in a polymer electrolyte membrane electrolyzer, deionized water (H2O) is separated into its component parts, hydrogen (H2) and oxygen (O2). These components are formed on both sides of a solid proton exchange membrane. When a DC voltage is applied to the electrolyzer, water supplied to an anode (or oxygen electrode) is oxidized into oxygen and protons, and electrons are released. Protons (H+ ions) are transferred through the proton exchange membrane to a cathode (or hydrogen electrode), where the protons meet electrons from the opposite side of the circuit and are reduced to hydrogen gas.

A core component of any polymer electrolyte membrane electrolyzer is a porous transport layer or PTL. This porous transport layer provides electrical contact between a proton exchange membrane and a bipolar plate on the opposite side of the proton exchange membrane. In addition, the porous transport layer facilitates transport of reactants and products therebetween. There is an increasing need for an improved electrolyzer exhibiting improved energy efficiency and lifespan.

In particular, to produce a large-area porous transport layer, it has been discovered that it is very important to control particle distribution so that cracks do not occur during debinding and sintering processes in manufacturing the large-area porous transport layer, thereby completing the present invention.

### SUMMARY OF THE INVENTION

An object of the invention is to provide a composition and a production method for producing a large-area titanium porous transport layer having a thickness of 0.4 mm or less and a porosity of 30-50%.

A first aspect of the present specification provides the following composition suitable for producing a large-area titanium porous transport layer.

A composition for a titanium porous transport layer comprising titanium powder, a binder, and a solvent,
wherein a particle size of the titanium powder satisfies the following conditions:
D50 is 15-30 µm and D90 is 30-40 µm.

A second aspect of the present specification provides a method of producing a large-area titanium porous transport layer using the composition.

The composition and the production method provided in the present specification can minimize the occurrence of cracks during the production of a large-area titanium porous transport layer.

### BREIF DESCRIPTION OF THE DRAWINGS

The above and other objects, features and other advantages of the present invention will be more clearly understood from the following detailed description taken in conjunction with the accompanying drawings, in which:
FIG. 1 is a schematic view of a water electrolyzer cell.
FIG. 2 is an appearance photograph of a sintered body of a porous transport layer manufactured using titanium powder having a particle size distribution of Preparation Example (a).

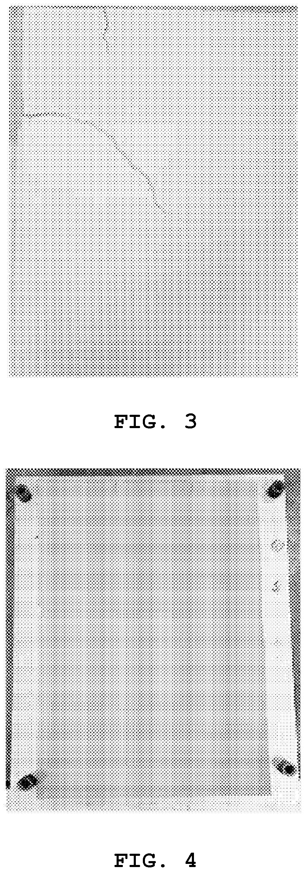

FIG. 3 is an appearance photograph of a sintered body of a porous transport layer manufactured using titanium powder having a particle size distribution of Preparation Example (b).
FIG. 4 is an appearance photograph of a sintered body of a porous transport layer manufactured using titanium powder having a particle size distribution of Preparation Example (c).

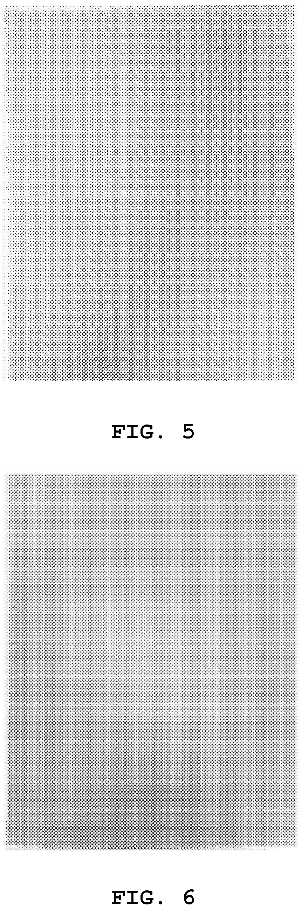

FIG. 5 is an appearance photograph of a sintered body of a porous transport layer manufactured using titanium powder having a particle size distribution of Preparation Example (d).
FIG. 6 is an appearance photograph of a sintered body of a porous transport layer manufactured using titanium powder having a particle size distribution of Preparation Example (e).

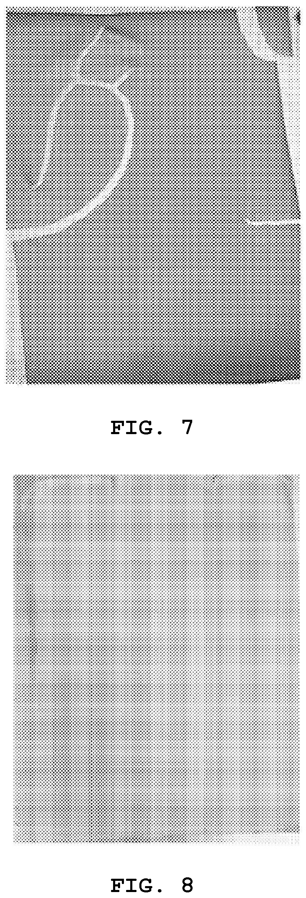

FIG. 7 is an appearance photograph of a sintered body of a porous transport layer manufactured using titanium powder having a particle size distribution of Preparation Example (f).
FIG. 8 is an appearance photograph of a sintered body of a porous transport layer manufactured using titanium powder having a particle size distribution of Preparation Example (g).

### DESCRIPTION OF EMBODIMENTS

Hereinafter, the present invention will be described in detail.

In the present specification, when a part is described as "comprising" a certain component, it means that it may further include other components rather than excluding other components unless specifically stated otherwise.

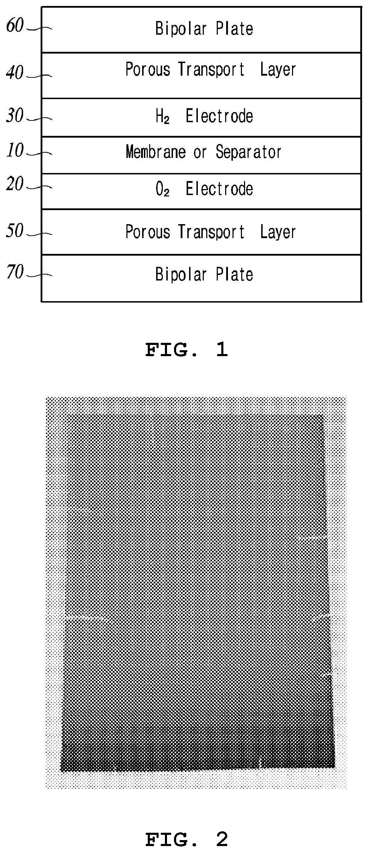

Referring to FIG. 1, a PEM water electrolyzer cell typically includes a membrane-electrode assembly (MEA: Membrane-Electrode Assembly) comprising an electrolyte membrane (10), an anode electrode (Anode Electrode) (20), and a cathode electrode (Cathode Electrode) (30); a gas diffusion layer (GDL: Gas Diffusion Layer) for a cathode (40); a porous transport layer (PTL: Porous Transport Layer) for an anode (50); a bipolar plate (bipolar plate) for a cathode (60); and a bipolar plate for an anode (70).

In this case, water introduced through an anode bipolar plate channel (not shown) is supplied to the anode (20) through the PTL (50), and hydrogen gas generated at the cathode (30) is discharged through the GDL (40) and a cathode bipolar plate channel (not shown). In the electrochemical reaction of such a PEM water electrolyzer cell, water supplied to the anode is separated into hydrogen ions (H+) and electrons along with oxygen gas by an oxygen evolution reaction (OER), which then move to the cathode through the electrolyte membrane and an external circuit, respectively, to generate hydrogen gas by a hydrogen evolution reaction.

The PTL serves to uniformly distribute and/or diffuse water, which is a reactant, to a surface of the anode electrode, discharges oxygen generated at the anode electrode to the outside through the bipolar plate, and serves to collect and/or transfer electrons generated by the electrochemical reaction. In order to maximize such functions of the PTL, various physical properties such as corrosion resistance, electrical conductivity, distribution and diffusion properties, low surface roughness, and mechanical strength are essential.

In this case, as the PTL, a material having excellent electrical conductivity, thermal conductivity, and corrosion resistance and low ohmic losses and mass transport losses is preferable. Accordingly, conventional PTLs are typically made of titanium (Ti), which exhibits excellent physical and chemical properties because corrosion does not occur even under high potential and acidic conditions.

The PTL is positioned between a high-rigidity stainless-steel-based bipolar plate and an anode electrode, and a thin electrolyte membrane having a thickness of tens of micrometers; one surface thereof absorbs water supplied through the bipolar plate, and the other surface thereof serves to uniformly distribute the supplied water to facilitate a contact reaction with a transition metal catalyst and to allow an initial electrolysis reaction to occur. Therefore, a porous structure is required, which exhibits excellent water absorption, enables uniform distribution, and allows formed hydrogen gas to quickly escape.

Meanwhile, in the case of such a titanium porous transport layer, it has been discovered that a precise particle size distribution is very important to prevent the occurrence of cracks when producing a large-area titanium porous transport layer having a thickness of 0.4 mm or less, preferably 0.3 mm or less, and more preferably 0.1 to 0.3 mm, and having a porosity of 30-50%, preferably 35-45%, and more specifically about 40%.

Throughout the present specification, "about" refers to a range of ±6%, and preferably ±5%.

When the porosity is insufficient, mass transport is not smooth; when the porosity is excessive, problems may occur in the mechanical strength of the transport layer, and the likelihood of cracks occurring during the sintering process increases.

A first aspect of the present specification provides the following composition suitable for producing a large-area titanium porous transport layer.

The composition for a titanium porous transport layer comprises titanium powder, a binder, and a solvent, wherein a particle size of the titanium powder satisfies the following conditions:
D50 is 15-30 *µ*m and D90 is 30-40 *µ*m.

A second aspect of the present specification provides a method of producing a large-area titanium porous transport layer using the composition.

The production method according to the present specification is a method of producing a porous transport layer that provides excellent workability by enabling easy manufacture with a uniform thickness, exhibits minimal performance variation and quality deviation across different positions of the manufactured product, and is highly economical as it is applicable to a roll-to-roll process.

The method provided in the present specification comprises:
forming a green sheet by casting a slurry comprising titanium powder and a binder;
debinding and sintering the green sheet;

The method is a generally well-known method of producing a titanium PTL.

The production method may optionally further comprise coating at least one surface of the sintered titanium porous transport layer with a noble metal.

In the present specification, the titanium powder includes both pure titanium powder and hydrogenated titanium powder, i.e., titanium hydride (TiH2), and may be used in any combination ratio.

The titanium hydride refers to particles that are either entirely or partially hydrogenated.

The particle size of the titanium powder may be appropriately adjusted to achieve a desired porosity; however, the present specification is characterized by specific control of the particle size to prevent cracks from occurring during the debinding and sintering processes for a large area.

In the present specification, "large area" means that at least one of a width and a length is 300 mm or more, 400 mm or more, or 500 mm or more.

Regarding the particle size of the powder,
a first condition is that D50 is 15-30 *µ*m, and
a second condition is that D90 is 30-40 *µ*m.

The first condition is essentially required, and the second condition is preferably required.

Optionally, a third condition is required, wherein D10 is 7 *µ*m to 15 *µ*m.

In the present specification, D50 represents a particle size value corresponding to 50% of a cumulative distribution of sizes of particles constituting the powder, and D10 and D90 represent particle size values corresponding to 10% and 90%, respectively.

In the present specification, the particles of the powder include all of spherical and elliptical shapes as well as irregular shapes whose forms are not specified. Meanwhile, the particle size defined in the present specification means a diameter, and may be measured using a commercially available laser particle size distribution analyzer.

In the case of non-spherical or irregular shapes in addition to spherical shapes, a laser particle size distribution analyzer may measure an area of a shadow projected by light and convert the measured area into a diameter corresponding to a shadow area calculated assuming the powder is spherical, to be used as the particle size.

As the laser particle size distribution analyzer, a commercially available one may be used. Specifically, Model LA960 Particle Size Analyzer manufactured by Horiba was used.

In the present specification, the porosity (%) was calculated by measuring the width, length, thickness, and weight of a sample, dividing the weight by the volume, dividing the resulting value by the theoretical density of titanium (4.54 g/cm³), subtracting this value from 1, and then multiplying by 100.

Regarding the first condition,
when D50 is less than 15 µm, cracks may occur due to an excessive content of fine powder, and
when D50 exceeds 30 µm, cracks may occur as the porosity becomes excessive.

Preferably, satisfaction of the second condition may be required along with the first condition.

When D90 exceeds 40 µm, cracks occur as the porosity becomes excessive due to a relatively excessive amount of large powder, and when D90 is less than 30 µm, a phenomenon in which cracks occur due to an excessive amount of fine powder and intermediate powder was confirmed.

D10 is inevitably less than 15 µm, and meanwhile, when D10 is too small, cracks may occur due to an excess of fine powder, and optionally, 7 µm or more may be preferable.

In the particle size distribution, "large powder" refers to powder having a size of 40 µm or more, "intermediate powder" refers to powder having a size in a range of 15-30 µm, and "fine powder" refers to powder having a size of 10 µm or less. However, this is used only for the purpose of interpreting results according to the powder particle size distribution and is not for the purpose of limiting or defining the scope of the present invention, and the scope of the present invention is defined only by the numerical ranges presented as the particle size distribution conditions.

In the present specification, an organic binder may be used as the binder, and for example, known organic binders such as carboxymethyl cellulose, polyvinyl alcohol (PVA), polyvinyl butyral (PVB), polyvinyl chloride (PVC), polyvinyl acetate (PVAc), polyacrylonitrile, and polyvinylidene fluoride (PVDF) may be used. As the solvent, in addition to water, organic solvents such as toluene, alcohols (methanol, ethanol, propyl alcohol, isopropyl alcohol, butanol, etc.), acetone, THF, and the like may be used without limitation. The solvent may be used as a mixture of organic solvents.

The solvent may be used in an amount of 10 to 60 parts by volume, 10 to 50 parts by volume, 20 to 60 parts by volume, 10 to 40 parts by volume, 20 to 50 parts by volume, 30 to 60 parts by volume, 30 to 50 parts by volume, or 40 to 60 parts by volume based on 100 parts by weight of the titanium powder. The titanium powder may be adjusted to occupy 10 to 60 parts by volume, 10 to 50 parts by volume, 20 to 60 parts by volume, 10 to 40 parts by volume, 20 to 50 parts by volume, 30 to 60 parts by volume, 30 to 50 parts by volume, or 40 to 60 parts by volume in 100 parts by volume of the total slurry. The parts by volume for the relative content of the solvent may also be changed to parts by weight and used as is.

The binder may be used in an amount of 0.01 to 4 parts by weight, 0.1 to 4 parts by weight, 1 to 4 parts by weight, 1 to 3 parts by weight, 1 to 2 parts by weight, 0.1 to 3 parts by weight, or 0.1 to 2 parts by weight.

The contents of the solvent and the binder may be changed. The solvent for preparing the slurry may be appropriately adjusted to form a viscosity suitable for coating, and for example, the amount of the solvent may be adjusted such that the titanium powder is 10 to 50 vol%.

A step of mixing for forming the slurry may be included, and a physical device or ultrasound or the like may be used for the mixing. In some cases, ball milling may be performed.

At this time, the stirring time may be 1 hour or more, 10 to 30 hours, 12 to 24 hours, or 18 to 24 hours, but is not limited thereto and may be a time during which uniform mixing is possible.

The viscosity at 25°C may be 1,000 to 8,000 cP, 1,500 to 7,500 cP, or 1,800 to 7,000 cP.

When the viscosity at 25 °C is within the above range, coating workability of the slurry is excellent and a produced thickness can be uniformly formed. In addition, when the viscosity at 25 °C is less than the above range, there is a problem in that the produced thickness is non-uniform so that surface roughness increases, and when it exceeds the above range, a problem of insufficient coating workability of the slurry may occur.

An anti-foaming agent, a dispersant, a plasticizer, a foaming agent, and the like may be further added to the slurry as needed.

As a coating method, various known coating methods may be used, and the coating may be formed by at least one coating method selected from the group consisting of dipping coating, doctor blade coating, comma coating, screen printing coating, slot die coating, gravure coating, lip coating, cap coating, bar coating, and tape casting.

In forming the green sheet, drying for removing the solvent after coating may be performed. Drying may be carried out using infrared radiation.

Drying may also be performed concurrently with debinding.

Debinding and sintering are described in detail below.

The debinding and sintering processes may be integrated and performed in a single sintering furnace. In this case, the debinding and sintering process may proceed incrementally within a temperature range of 300 to 1500°C to provide sinterability according to the size of the titanium particles, wherein debinding is carried out in a low-temperature range and sintering is carried out in a high-temperature range.

The debinding may be performed at 300 to 700°C, 350 to 600°C, or 400 to 500°C under an inert gas atmosphere. When the temperature during debinding is less than the above range, the solvent may remain without evaporating, which can cause a problem of degrading PTL performance. When the temperature exceeds the above range, the titanium powder may be oxidized in an environment other than a high vacuum atmosphere, which can lead to a problem of degrading the PTL performance.

Additionally, any commonly used inert gas, such as argon (Ar) gas, may be utilized. Debinding may be performed by increasing the temperature at a rate of 1 to 5°C/min or 1 to 3°C/min and maintaining the temperature for 1 to 4 hours or 1 to 3 hours.

Sintering may be performed at temperatures and pressures suitable for PTL fabrication. For instance, the temperature may be 900 to 1,500°C, 950 to 1,400°C, or 1,000 to 1,300°C. Additionally, the sintering may be conducted at a vacuum level of 10⁻⁵ Torr or less, 10⁻⁸ to 10⁻⁵ Torr, or 10⁻⁷ to 5x10⁻⁶ Torr. Sintering under vacuum conditions facilitates the removal of hydrogen from titanium hydride.

When the sintering temperature is below the aforementioned range, the titanium powder may be under-sintered, leading to excessively large pores or weakened rigidity in the PTL. Conversely, if the temperature exceeds the aforementioned range, the titanium powder may be over-sintered, which can result in clogged pores.

Additionally, when the vacuum level during sintering is below the aforementioned range, dehydrogenation of the titanium hydride may be insufficient, the titanium powder may be oxidized at high temperatures, or the PTL may be contaminated by impurities within the sintering furnace. If the vacuum level exceeds the aforementioned range, an unnecessarily high-specification vacuum pump is required, which may lead to increased processing costs.

The manufacturing method described above provides excellent process cost-effectiveness and efficiency by enhancing product yield through the prevention of cracks during large-area fabrication, thereby offering high economic viability.

The fabricated titanium sintered body may be used as a porous transport layer (PTL) for a water electrolysis cell. In this context, the porous transport layer is disposed on the anode side of the water electrolysis cell and functions to facilitate the reaction by diffusing hydrogen ions and electrons, which are produced and consumed by the water electrolysis reaction, toward a catalyst layer.

Hereinafter, examples for fabricating a titanium porous layer according to an embodiment of the present invention are described in detail. These examples are merely illustrative of certain aspects of the present invention, and the scope of the invention is not limited thereto.

### Example 1. Fabrication of a titanium porous transport layer

Titanium hydride powders having different particle size distributions were prepared. These powders were mixed with a solution comprising 65% toluene, 20% ethanol, and 15% PolyVinyl Butyral (PVB). Specifically, 30 parts by weight of the solution were used relative to 80 parts by weight of the powder, and the resulting mixture was sufficiently stirred to achieve uniform dispersion, thereby preparing a slurry.

Subsequently, the slurry was primary tape-cast to a width of 200 mm on a PP film to produce a green sheet. The molded body, formed via tape casting and pressing, was cut to a length of 500 mm and then subjected to debinding to remove the binder and solvent. The debinding was performed at 750°C for approximately 2 hours under an argon atmosphere, wherein the heating rate was controlled to prevent damage due to shrinkage.

Upon completion of debinding, the porous sheet was transformed into a structurally robust form through sintering. The sintering was carried out at a vacuum level of 2×10-6 torr and a temperature of 1,100°C for 120 minutes. Performing the sintering under vacuum conditions effectively removed hydrogen from the titanium hydride.

Consequently, a titanium sintered body having a total thickness of approximately 0.3 mm, namely a titanium porous transport layer, was fabricated.

Table 1 below provides the results of producing titanium sintered bodies using titanium powders having various particle size distributions.

**[Table 1]**

| Manufac turing Example | Particle size distribution (µm) | Results |
|---|---|---|
| (a) | D10 = 19.7, D50 = 31.3, D90 = 57.7 | Crack formation, porosity 60% High porosity and crack formation due to a large proportion of large-diameter particles |
| (b) | D10 = 8.9, D50 = 14.6, D90 = 22.6 | Cracking occurs, porosity 30% - high fine particle content causes cracking |
| (c) | D10 = 9.4, D50 = 16.8, D90 = 29.9 | Micro-cracks occur; porosity 35%; micro-powder and medium-sized powder are abundant, causing micro-cracks |
| (d) | D10 = 10.9, D50 = 20.8, D90 = 36.1 | No cracks, porosity 40% |
| (e) | D10 = 23.1, D50 = 31.0, D90 = 41.3 | No cracks, porosity 55% |
| (f) | D10 = 8.5, D50 = 13.1, D90 = 20.6 | Cracks present, porosity <30% Cracks formed due to high mineral content |
| (g) | D10 = 16.4, D50 = 27.7, D90 = 43.8 | Micro-cracks formed, porosity 50% |

The porosity was calculated by measuring the length, width, thickness, and weight of a sample to determine its bulk density (weight divided by volume). This value was then divided by the theoretical density of titanium 4.54 g/cm3 to obtain the relative density, and the porosity (%) was finally derived by subtracting the relative density from 1 and multiplying by 100.

Accordingly, only the result of Preparation Example (d) exhibited the target porosity while remaining entirely free of cracks.

The titanium sintered body produced via sintering may be surface-coated with an oxidation-resistant noble metal to prevent degradation of electrical conductivity caused by surface oxidation of the titanium. The noble metal may include platinum (Pt), gold (Au), or nickel (Ni). Preferably, the coating is uniformly formed throughout the entire porous transport layer, extending into the internal regions thereof. The coating may be applied to one or both surfaces of the sheet-type transport layer.

Coating with an oxidation-resistant noble metal inhibits the formation of an oxide layer on the surface of the titanium sintered body, thereby preventing degradation of electrical conductivity. Additionally, prior to forming the noble metal layer, removing a native oxide layer formed during fabrication may be further performed. To remove the oxide layer, wet or dry etching may be carried out, wherein the dry etching may include plasma etching.

Subsequently, noble metal coating may employ wet methods, such as electrolytic or electroless plating, or dry methods, such as sputtering, to achieve uniform coating across the entire porous surface. In wet coating via immersion, such as plating, the entire surface may be coated simultaneously. Conversely, when coating is performed by sputtering, a single-sided application may result in insufficient coverage on the opposite surface; therefore, the coating may be applied to both surfaces of the transport layer.

The coating may have a thickness of 0.05 to 0.5 µm on the surface of the titanium. A thickness below this lower limit is not only difficult to achieve but also makes it challenging to ensure sufficient electrical conductivity. Conversely, a thickness exceeding this upper limit is undesirable from an economic perspective.

Prior to noble metal coating, an etching may be further performed to remove an oxide layer formed on the surface of the titanium sintered body. The etching of the oxide layer may be carried out using a gas plasma, such as nitrogen or argon.

While the present invention has been described with reference to the preferred embodiments in the detailed description, it will be understood by those skilled in the art or those having ordinary skill in the technical field that various modifications and changes may be made to the present invention without departing from the spirit and scope of the invention as set forth in the following claims.

## Claims

1. A method of producing a large-area titanium porous transport layer,
wherein at least one of the width and length of said large-area titanium porous transport layer is 400 mm or more, and the porosity is 35% to 45%,
the method comprising:
forming a green sheet by applying a slurry comprising titanium powder and a binder;
debinding the green sheet while increasing a temperature at a heating rate of 1 to 5 °C/min and sintering the green sheet under a vacuum of 10⁻⁸ Torr to 10⁻⁵ Torr;
wherein the particle size of the titanium powder satisfies the following conditions:
D50 is 15-30 µm and D90 is 30-40 µm.

2. The method of claim 1,
wherein the titanium powder has a D10 of at least 7 µm and less than 15 µm.

3. The method of claim 1 or 2,
further comprising coating a noble metal onto at least one surface of the sintered titanium porous transport layer.

4. The method of one of claims 1 to 3,
wherein the titanium powder comprises titanium hydride powder.

5. The method of one of claims 1 to 4,
wherein at least one of the width and the length of the titanium porous transport layer is 500 mm or more.

6. The method of one of claims 1 to 5,
wherein the thickness of the titanium porous transport layer is 0.4 mm or less.

7. The method of one of claims 1 to 5,
wherein the thickness of the titanium porous transport layer is 0.3 mm or less.
